# EUROPEAN PATENT SPECIFICATION

(11) **EP 2 125 334 B1**
(45) Date of publication and mention of the grant of the patent: **07.03.2012**
(21) Application number: 08707973.7
(22) Date of filing: 17.01.2008
(51) Int. Cl.: B29C 65/00, B29C 65/06, B29C 65/36, B32B 27/02, B64C 1/00, B32B 3/12

(54) **METHOD OF JOINING A THERMOPLASTIC MATERIAL TO A FIBRE COMPOSITE MATERIAL AND DEVICE MANUFACTURED THEREWITH**
VERFAHREN ZUM VERBINDEN EINES THERMOPLASTISCHEN MATERIALS MIT EINEM FASERVERBUNDMATERIAL UND DAMIT HERGESTELLTE VORRICHTUNG
PROCÉDÉ DE LIAISON D'UNE MATIÈRE THERMOPLASTIQUE À UNE MATIÈRE COMPOSITE COMPRENANT DES FIBRES

(30) Priority: 17.01.2007 DE 102007003357
(43) Date of publication of application: 02.12.2009
(73) Proprietor: Airbus Operations GmbH, 21129 Hamburg (DE); EADS Deutschland GmbH, 85521 Ottobrunn (DE)
(72) Inventor: Metzech, Sabine, 27751 Delmenhorst (DE); SCHENK, Jürgen, 26180 Rastede (DE); WACHINGER, Georg, 83026 Rosenheim (DE)
(74) Representative: UEXKÜLL & STOLBERG
(86) International application number: PCT/EP2008/050528
(87) International publication number: WO 2008/087194

(56) References cited:
- WO-A-92/15817
- WO-A-2006/094042
- DE-A1- 10 307 906
- GB-A- 2 061 183
- US-A1- 2004 026 436
- US-B1- 6 913 110

## Description

The invention relates to a method of joining a thermoplastic material to a fibre composite material. In addition, the invention relates to a device comprising thermoplastic material and fibre composite material. Similar methods and devices are already known in the automotive sector, of GB 2 061 183.

In aircraft construction in particular, thermoplastic materials are often attached to fibre composite materials by means of mechanical attachment, for example by means of screws, or by adhesive bonding. For example, plastics brackets which comprise thermoplastic material are often attached to components, such as for example a sidewall panel or a hat rack box, which comprise fibre composite material, within a pressurised area, for example within a cabin area of an aircraft.

Adhesive bonding of plastics brackets comprising thermoplastic material to components comprising fibre composite material requires very complex pretreatment of the adherend surfaces of the plastics brackets. The surfaces have first to be roughened and then pretreated with a primer. Only after this pretreatment can the plastics brackets be adhesively bonded to the components. Then it is necessary to wait for a certain period, as a rule 5 to 8 hours, until the adhesive has cured and exhibits the necessary initial adhesive strength. Adhesives which are heat-curing are also frequently used. When using such adhesives, the plastics brackets and components to be joined together have to be cured for up to 48 hours in an oven. The adhesive bonding process is thus very complex and time-consuming. Moreover, the adhesives include constituents which are hazardous to health.

Alternatively or in addition, plastics brackets comprising thermoplastic material are often attached to components comprising fibre composite material by means of screws. This has the disadvantage, however, that the size and position of the holes for the screws have to be known as early as during production of the plastics brackets and the components and that, in the event of a change to the attachment position in the components and/or in the plastics brackets, new holes have to be introduced. This is disadvantageous for the entire production process.

It is the object of the present invention to provide a method of joining a thermoplastic material to a fibre composite material which is less complex and time-consuming than known adhesive bonding methods, which, moreover, does not use any additional substances hazardous to health and which makes it simpler to change the position at which a thermoplastic material is joined to a fibre composite material compared with mechanical attachment, such as for example by means of screws.

This object is achieved by a method according to claim 1.

By welding the thermoplastic material to the fibre composite material, the time needed for joining the materials is very greatly reduced. It amounts in particular to just a few seconds. In addition, generally the materials do not have to be pretreated, and no additional substances hazardous to health are required. Moreover, no holes have to be formed in the components and plastics brackets, so making it easier to change the position at which the thermoplastic material is joined to the fibre composite material.

The thermoplastic material is to be welded to the fibre composite material by "motion welding". The term "motion welding" covers any relative motion between the thermoplastic material and the fibre composite material which generates heat of motion in the joint area which is sufficient to weld together the thermoplastic material and the fibre composite material. The thermoplastic material and the fibre composite material are moved relative to one another during motion welding in particular in such a way that the thermoplastic material is moved relative to the fibre composite material in such a way that the thermoplastic material starts to melt and the fibre composite material is heated. It is preferred for the thermoplastic material and the fibre composite material to be moved relative to one another during motion welding in particular in such a way that the thermoplastic material is moved relative to the fibre composite material and the thermoplastics material and the fibre composite material are pressed against one another in such a way that the thermoplastic material starts to melt and the fibre composite material is heated.

In a simple manner, the motion welding allows a heat of motion, in particular a heat of friction, to be generated in the joint area between the thermoplastic material and the fibre composite material which is sufficient to weld the two materials together.

In the same way, the energy of the motion welding may also be used for targeted removal of the thermoplastic material.

The relative motion is generated by rotary motion and/or vibratory motion of the thermoplastic material and of the fibre composite material relative to one another. When using a vibratory motion, the fibre composite material and the thermoplastic material are preferably joined together by vibration welding. In vibration welding, heat of friction is generated by the vibratory motion in the joint area between the thermoplastic material and the fibre composite material which is sufficient to weld together the two materials.

It is additionally preferable for the thermoplastic material to be welded to the fibre composite material by induction welding. For this purpose, an electrically conductive material is arranged in a joint area between the thermoplastic material and the fibre composite material and induction heat is generated in the electrically conductive material which is sufficient to cause the thermoplastic material to start to melt and to heat the fibre composite material. In induction welding, currents are preferably induced in the electrically conductive material which generate the induction heat by means of resistance effects and/or magnetic hysteresis. Preferably, to generate the induction heat, metallic particles and/or a metallic layer is/are introduced into the joint area between the thermoplastic material and the fibre composite material.

It is further preferred that the electrically conductive material is a slotted and stretched metal foil, for example, e.g. the metal foil with the tradename Astrostrike. The electrically conductive material is preferentially made of and/or comprises aluminium and/or copper. It is further preferred that the electrically conductive material is a metallic woven material and/or a metallic layer. It is further preferred that the electrically conductive material comprises or consists of metallic nano particles. The electrically conductive material, in particular the metallic layer, is preferentially generated by a thermal spraying method of one or several metal powders, which can comprise one or several metals, or by using a sintering technique with one or several metals or by melting of one or several metal foils and/or of one or several solder materials, in particular, on the thermoplastic material.

It is further preferred that induction heat is generated by using a medium frequency or a high frequency. In a preferred embodiment, a frequency within a frequency range of 10 to 50 kHz is used, in particular with a power within a range of 2 to 5 kW. In a further preferred embodiment, a frequency within a frequency range of 400 kHz to 1 MHz is used, in particular with a power smaller than 25 kW.

In a further preferred embodiment, the fibre composite material comprises CFRP material and an induction heat is generated in the CFRP material, in particular, without using an additional electrically conductive material. The induction heat is preferentially generated close to the surface of the CFRP material.

The fibre composite material is a fibre-reinforced matrix material or comprises a fibre-reinforced matrix material. The matrix material is a thermoset or comprises a thermoset. It is preferable for fibres of the fibre composite material to be unidirectionally oriented or to form a woven fabric. The fibre composite material is therefore preferably a fibre-reinforced plastic (FRP), i.e. in particular an in particular reinforced, thermoplastic and/or thermosetting matrix material provided with unidirectional fibres or fibres forming a woven fabric. It is additionally possible for the fibre composite material to be produced using a resin, in particular a polyaddition and/or a polycondensation resin. The fibre composite material is preferably arranged on a honeycomb structure, in particular a Nomex honeycomb. In this case, the honeycomb structure takes the form in particular of a layer, and the fibre composite material is applied in layers to two mutually facing sides of the honeycomb structure.

Provision may be made for the thermoplastic material to consist of one or more engineering thermoplastics or to comprise one or more engineering thermoplastics. Provision may further be made for the thermoplastic material to consist of polyamide or to comprise polyamide. Furthermore, the thermoplastic material can consist of or comprise polyetherimid (PEI) and/or polyetheretherketone (PEEK). In a preferred embodiment, the thermoplastic material comprises a fibre reinforcement, in particular a short fibre reinforcement, wherein the fibres can be, for example, carbon fibres and/or glass fibres. In a further preferred embodiment, the thermoplastic material does not comprise a fibre reinforcement.

By using this stated fibre composite material and thermoplastic materials, it is possible to produce a particularly good joint between these materials using the method according to the invention.

The thermoplastic material is a constituent of a bracket, in particular a support bracket, or the bracket consists of the thermoplastic material, and the fibre composite material is a constituent of a component or the component consists of the fibre composite material, such that the thermoplastic material of the bracket is welded together with the fibre composite material of the component in order to join the bracket to the component to form a bracket arrangement. A bracket may in this manner be joined simply and quickly to a component.

It is preferable for the bracket of thermoplastic material to be set in motion, while the fibre composite material of the component, to which it is to be joined, does not move.

Provision may be made for the component to be a sidewall panel in an aircraft, preferably in a space in the aircraft which is pressurisable when in operation, in particular in the cabin space of the aircraft, and/or a hat rack box of the aircraft or a part of the sidewall panel and/or a part of the hat rack box. Furthermore, it is preferable for the method to be performed within an aircraft, preferably within a space pressurisable when in operation, in particular within a cabin space, of an aircraft. The method according to the invention thus makes it possible simply, quickly and reliably to produce a welded joint between a thermoplastic material and a fibre composite material, in particular in an aircraft.

The bracket is preferably so constructed that it may support desired objects.

The invention additionally relates to a device comprising thermoplastic material and fibre composite material, the thermoplastic material and the fibre composite material comprising a joint which may be produced by the method according to the invention.

Preferred configurations of the device are listed in claims 20 to 24.

Preferred embodiments of the invention are explained in greater detail below with reference to drawings, in which
- Fig. 1: is a schematic view of a device with which an embodiment of the method according to the invention may be performed,
- Fig. 2: shows a layered structure of a joint according to the invention between an FRP material and a thermoplastic material,
- Fig. 3: shows a sandwich with FRP material,
- Fig. 4: shows a schematic view of an aircraft with a cabin space, in which a bracket arrangement is arranged, and
- Fig. 5: shows a schematic cross-sectional view of a bracket comprising thermoplastic material.

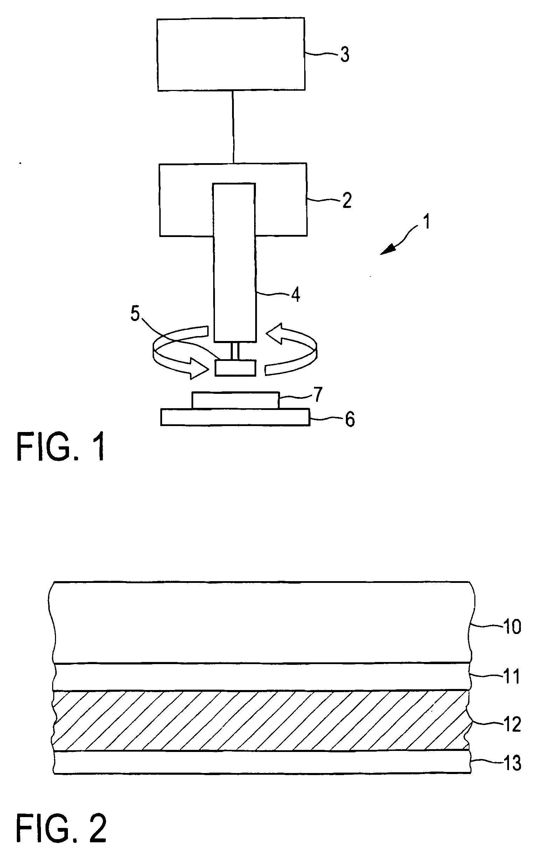

Fig. 1 shows a schematic view of a device 1 for joining a thermoplastic material to a fibre composite material, wherein the fibre composite material is a fibre-reinforced matrix material or comprises a fibre-reinforced matrix material and wherein the matrix material is a thermoset or comprises a thermoset. The device 1 comprises a turning and lifting unit 2 and a control unit 3, which is connected to the turning and lifting unit 2 and controls it. The device 1 additionally comprises a bracket holder 4, to which a bracket 5 may be detachably attached. The bracket holder 4 is held rotationally and height-adjustably in the turning and lifting unit, such that the turning and lifting unit 2 may turn the bracket 5 by means of the bracket holder 4 and modify its position as regards height. The device 1 additionally comprises a fibre composite material holder 6, on which fibre composite material 7, in this embodiment FRP material, is held.

By means of the device 1, a bracket 5, for example in the height position illustrated in Fig. 1, may be inserted into the bracket holder 4. Furthermore, a fibre composite material 7, in particular an FRP material, may be inserted into the fibre composite material holder 6. Once the bracket 5 and the fibre composite material 7 have been inserted into the corresponding holders 4, 6, the bracket holder 4 is moved in the direction of the fibre composite material 7, such that the bracket 5 comes into contact with the fibre composite material 7 with a predetermined pressure. Before, during or after build-up of the predetermined pressure between the bracket 5 and the fibre composite material 7, the bracket 5 begins to turn with a predetermined frequency due to the bracket holder 4. As a result of the rotary motion, the surface of the bracket 5, which consists of thermoplastic material or comprises thermoplastic material, and the surface of the fibre composite material 7 rub against one another, so producing heat of motion. This motion process is maintained until a heat of motion has been generated which is sufficient to join the two surfaces together. The motion is then stopped, and the surfaces cool down. The heating phase and the cooling phase each last only a few seconds, in particular each phase lasts less than 5 seconds.

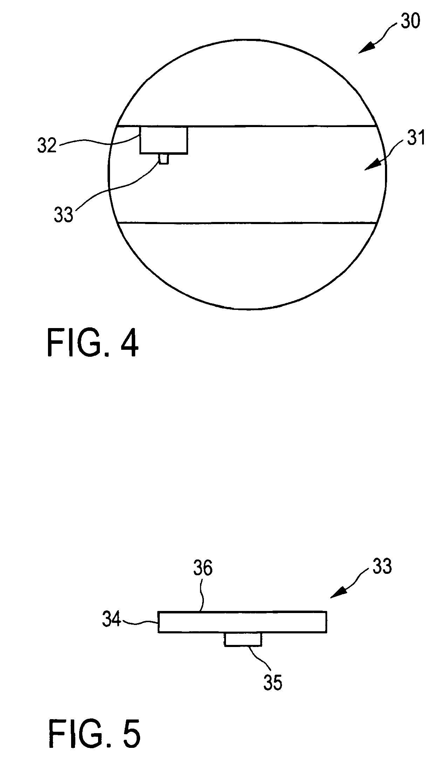

Fig. 4 shows a schematic sectional view of an aircraft 30 with a cabin area 31 pressurisable when in operation. Within the cabin area 31 a component 32 is arranged which comprises fibre composite material, in particular FRP material, or consists thereof. The component 32 is joined to a bracket 33, which comprises thermoplastic material or consists of thermoplastic material. The joint between the component 32 and the bracket 33 may be produced by the above-described method according to the invention.

The joint between the fibre composite material and the thermoplastic material differs from a welded joint between other materials. In particular, the microscopic structure of the joint between a thermoplastic material and a fibre composite material, which may be produced by means of the method according to the invention, differs from the microscopic structure of a welded joint between other materials, for example between two metallic materials.

In Fig. 1, the fibre composite material 7 is held by a fibre composite material holder 6. According to the invention, however, the fibre composite material 7 may also be part of a larger component, for example a sidewall panel or a hat rack box, which is held either by a corresponding holder or has already been mounted for example in a cabin area of an aircraft. In the latter case, no holder is needed to hold the fibre composite material or to hold the component.

The turning and lifting unit 2 and the control unit 3 may take the form, for example, of the stationary device described in US 5,160,393. Alternatively, the turning and lifting unit 2, the control unit 3 and the bracket holder 4 may also be of hand-held construction.

The bracket 5 comprises thermoplastic material at least in the area of the joint with the fibre composite material, which material is joined to the fibre composite material in a manner according to the invention. A resultant sequence of layers in the joint area is shown schematically in Fig. 2. The thermoplastic material 10 is welded to the fibre composite material 11. In this embodiment, the fibre composite material 11 is applied to a honeycomb structure 12, in particular to a Nomex honeycomb. Preferably, the honeycomb structure 12 is applied in turn to a second layer 13 of fibre composite material.

The thermoplastic material 10 is preferably an engineering thermoplastic and more preferably polyamide. According to the invention, however, the thermoplastic material may also be a standard thermoplastic or a high performance thermoplastic. The engineering thermoplastic used may preferably be PA66 (with or without glass fibres), in particular PA66-GF30 und PA60-GF30, PA12, PC (polycarbonates) or PMMA. The materials PA66, PA12 and PC are preferably provided with flame retardant and therefore preferably comprise particularly good fire characteristics.

The high performance thermoplastic used may preferably be PEI (polyetherimides), with or without glass fibres, and glass fibre-reinforced modifications thereof. Further high performance thermoplastic materials may be, for example: aromatic polyetherketones (PAEK), PPSU (polyphenylsulfone) and PAI (polyamideimides).

The fibre composite material 11, which is preferably an FRP material, may for example comprise carbon fibres and/or glass fibres, in particular a CFRP material and/or a GRP material. The fibre composite material is preferably produced using a resin, in particular using a polyaddition and/or polycondensation resin. The sequence of layers comprising fibre composite material layers 11, 13 and an interposed honeycomb structure 12 is also known as a sandwich. A foam may be used instead of or in addition to the honeycomb structure 12.

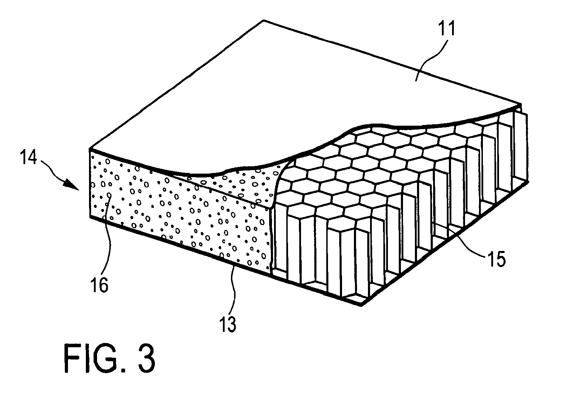

Fig. 3 is a schematic diagram of a sandwich with a fibre composite material layer 11 on top in Fig. 3 and a fibre composite material layer 13 at the bottom in Fig. 3, these enclosing a layer 14 with a honeycomb structure 15 or a foam 16. For reasons of clarity, in Fig. 3 part of the fibre composite material layer 11 has been removed. Preferably, the fibre composite material layer 11 completely covers the layer 14. For reasons of clarity, in Fig. 3 both the honeycomb structure 15 and the foam 16 are additionally illustrated. It is preferable, however, for the sandwich to comprise only either a honeycomb structure 15 or a foam 16 between the fibre composite material layers 11, 13. The honeycomb structure is preferably a Nomex honeycomb.

The layers 11, 13 of the fibre composite material preferably have a thickness in the range from 0.1 to 0.2 mm and more preferably a thickness of 0.15 mm.

The microscopic sequence of the joining process may possibly be described as follows.

During welding, the surface of the thermoplastic material passes into a high-viscosity phase, which lies above the glass transition range and below the melting point. This means that the thermoplastic material merely starts to melt. At the same time, the surface of the fibre composite material is heated and enters into a quasi-chemical union with the high-viscosity phase of the thermoplastic material. If the fibre composite material comprises resins, in particular polyaddition and/or polycondensation resins, resins which may as yet be uncured enter into a quasi-chemical union with the high-viscosity phase of the thermoplastic material, i.e. the resins may not be cured completely, for example, more than 50 per cent of the resins may be cured, in particular more than 80 percent may be cured, wherein uncured resins may enter into a quasi-chemical union with the high-viscosity phase of the thermoplastic material. Moreover, the joint could come about in that the high-viscosity thermoplastic material of the bracket is drawn through micropores in the fibre composite material, such that the thermoplastic material penetrates the fibre composite material, so producing the joint. The high-viscosity thermoplastic material could, moreover, be drawn into the fibre composite material and through the fibre composite material in such a way that it effects anchoring on the side of the fibre composite material remote from the thermoplastic material and so produces the joint. The high-viscosity phase of the thermoplastic material could in particular be drawn through the fibre composite material when the fibre composite material is applied to a honeycomb structure, as shown for example in Fig. 2. Due to the porosity of the fibre composite material, a capillary effect could arise in the direction of the honeycomb structure, which may at least in places cause the high-viscosity thermoplastic material to be drawn into the fibre composite material.

In another embodiment, the thermoplastic material is welded to the fibre composite material by induction welding, wherein an electrically conductive material is arranged in a joint area between the thermoplastic material and the fibre composite material. It is preferred that the electrically conductive material is a slotted and stretched metal foil, for example, a metal foil with the tradename Astrostrike. The electrically conductive material is preferentially made of and/or comprises aluminium and/or copper. In another preferred embodiment, the electrically conductive material is a metallic woven material and/or a metallic layer. In a further preferred embodiment, the electrically conductive material comprises or consists of metallic nano particles. The electrically conductive material, in particular the metallic layer, is preferentially generated by a thermal spraying method of one or several metal powders, which can comprise one or several metals, or by using a sintering technique with one or several metals or by melting of one or several metal foils and/or of one or several solder materials, in particular, on the thermoplastic material.

In a preferred embodiment, induction heat is generated by using a medium frequency or a high frequency. It is preferred that a frequency within a frequency range of 10 to 50 kHz is used, in particular with a power within a range of 2 to 5 kW. In a further preferred embodiment, a frequency within a frequency range of 400 kHz to 1 MHz is used, in particular with a power smaller than 25 kW.

In a further preferred embodiment, the fibre composite material comprises CFRP material and an induction heat is generated in the CFRP material, in particular, without using an additional electrically conductive material. The induction heat is preferentially generated close to the surface of the CFRP material.

Examples of the method according to the invention for joining a thermoplastic material to a fibre composite material are described below.

### Example 1

According to Example 1, a bracket, which comprises thermoplastic material and is illustrated schematically and by way of example in Fig. 5, is joined to a fibre composite material, which in this embodiment is an FRP material.

In this exemplary embodiment, the bracket 33 comprises a disc-shaped attachment portion 34, which is joined to the FRP material, and a holding element 35. The attachment portion 34 and the holding element 35 have a polyamide PA66 content of 70% and a glass fibre content of 30%. The holding element 35 serves to hold an object, such as for example an electrical lead or heavier objects. The thickness of the attachment portion amounts in this example to 2.2 mm, and the diameter of the attachment portion amounts in this example to 24 mm.

In this example, the FRP material is a GRP laminate, the top outer ply of the laminate, with which the surface 36 of the bracket 33 is to be connected, being 40% resin and 60% glass fibre fabric. The thickness of the laminate amounts to 2 mm.

The bracket is secured in the bracket holder 4 of the device 1 illustrated schematically in Fig. 1. Furthermore, the GRP laminate, i.e. the FRP material, is secured in the holder 6 of the device 1. The bracket is then pressed by means of the turning and lifting unit 2 and the bracket holder 4 onto the GRP laminate and turned relative to the GRP laminate in order to generate heat of motion and to join the GRP laminate to the bracket.

The pressure which acts during the welding process between the thermoplastic material and the FRP material amounts in this example to 0.5, 1.0 and 1.5 bar. For each of these pressures a joint was produced in this example according to the invention between the bracket, which comprises the thermoplastic material, and the FRP material. During the welding process, the bracket, which comprises thermoplastic material, is rotated relative to the FRP material in this exemplary embodiment at an angular frequency of 120 Hz. The welding depth amounts in this exemplary embodiment to 0.35 mm. In this exemplary embodiment the welding process was controlled by means of the welding depth, i.e. the welding process was terminated as soon as the predetermined welding depth had been reached.

To check the joints between the thermoplastic material and the FRP material, tensile shear strength was determined. Each of the joints produced according to the invention has excellent tensile shear strengths. These tensile shear strengths are sufficient, for example, to attach brackets for holding heavy objects to FRP components.

### Example 2

In this example too, the bracket described in Example 1 is used. In this example, the FRP material is CFRP laminate, the top outer ply of the laminate, to which the bracket is joined, being 45% resin and 55% carbon fibre fabric. The thickness of the laminate amounts to 2 mm.

The method according to the invention for connecting a thermoplastic material (bracket) to an FRP material (surface of the CFRP laminate) was performed using the device 1 illustrated schematically in Fig. 1.

In this example the angular frequency amounts to 160 Hz and the welding time to 3 s. The welding time is the time for which the bracket is moved relative to the FRP material and a predetermined pressure, which amounts in this example to 1.0 bar, is present between the thermoplastic material and the FRP material. The welding process is regulated in this example by means of the welding time, i.e. the welding process was performed in each case for 3 s. In these examples too, the tensile shear strength was determined.

Joints between a thermoplastic material and an FRP material produced with the test parameters according to Example 2 exhibit excellent tensile shear strengths, which are sufficient for example to attach a bracket of thermoplastic material for holding heavy objects to an FRP component.

In addition, the thermoplastic material may be welded together with the fibre composite material by induction welding. For this purpose, an electrically conductive material is arranged in a joint area between the thermoplastic material and the fibre composite material and induction heat is generated in the electrically conductive material which is sufficient to cause the thermoplastic material to start to melt and to heat the fibre composite material. In induction welding, currents are preferably induced in the electrically conductive material which generate the induction heat by means of resistance effects and/or magnetic hysteresis. Preferably, to generate the induction heat, metallic particles and/or a metallic layer is/are introduced into the joint area between the thermoplastic material and the fibre composite material.

Although the invention has been described by way of example with reference to a bracket, which is joined to an FRP material, the invention is not restricted to joining a bracket to an FRP material. According to the invention, other objects which comprise thermoplastic material and/or consist thereof may be joined to fibre composite material, in particular to FRP material. The invention is also not restricted to specific bracket shapes.

The invention is not restricted to the pressures, welding times, welding depths or frequencies stated in the exemplary embodiment. Any desired pressures may be used between the fibre composite material and the thermoplastic material, as long as a heat of motion is generated which is sufficient to weld these two materials together.

## Claims

1. A method of joining a thermoplastic material (10) to a fibre composite material (11) of an aircraft, the thermoplastic material (10) being welded to the fibre composite material (11), wherein the fibre composite material is a fibre-reinforced matrix material or comprises a fibre-reinforced matrix material and wherein the matrix material is a thermoset or comprises a thermoset, **characterised in that** the thermoplastic material (10) is welded to the fibre composite material (11) by motion welding, wherein a relative motion between the thermoplastic material and the fibre composite material is generated by rotary and vibration motion of the thermoplastic material and the composite material relative to one another, wherein the thermoplastic material (10) is a constituent of a bracket (33) or the bracket (33) consists of the thermoplastic material (10), and wherein the fibre composite material (11) is a constituent of a component (32) or the component (32) consists of the fibre composite material (11), such that the thermoplastic material (10) of the bracket (33) is welded together with the fibre composite material (11) of the component (32) in order to join the bracket (33) to the component (32) to form a bracket arrangement.

2. A method according to any one of the preceding claims, **characterised in that** fibres of the fibre composite material are unidirectionally oriented or form a woven fabric.

3. A method according to any one of the preceding claims, **characterised in that** the fibre composite material (11) comprises carbon fibres and/or glass fibres, preferably a CFRP material and/or a GRP material.

4. A method according to any one of the preceding claims, **characterised in that** the fibre composite material (11) is produced using a resin, in particular using a polyaddition and/or polycondensation resin.

5. A method according to any one of the preceding claims, **characterised in that** the fibre composite material (11) is arranged on a honeycomb structure (15), in particular a Nomex honeycomb.

6. A method according to claim 5, **characterised in that** the honeycomb structure (15) takes the form of a layer and the fibre composite material (11) is applied in layers on two mutually facing sides of the honeycomb structure (15).

7. A method according to any one of the preceding claims, **characterised in that** the thermoplastic material (10) consists of one or more engineering thermoplastics or comprises one or more engineering thermoplastics.

8. A method according to any one of the preceding claims, **characterised in that** the thermoplastic material (10) consists of polyamide or comprises polyamide.

9. A method according to any of the preceding claims, **characterised in that** the component is a sidewall panel in an aircraft (30), preferably in a space (31) in the aircraft which is pressurisable when in operation, and/or a hat rack box of the aircraft or a part of the sidewall panel and/or a part of the hat rack box.

10. A device comprising thermoplastic material (10) and fibre composite material (11) of an aircraft, wherein the thermoplastic material (10) and the fibre composite material (11) comprise a joint, wherein the fibre composite material is a fibre-reinforced matrix material or comprises a fibre-reinforced matrix material and wherein the matrix material is a thermoset or comprises a thermoset, wherein the device comprises a bracket arrangement with a bracket (33) and a component (32), the thermoplastic material (10) being a constituent of the bracket (33) or the bracket (33) comprising the thermoplastic material (10), the fibre composite material (11) being a constituent of the component (32) or the component (32) comprising the fibre composite material (11), the bracket (33) being joined to the component (32) by the joint, the joint being producible using a method according to any one of claims 1 to 9.

11. A device according to claim 10, **characterised in that** the device comprises a sequence of layers with a first layer comprising or consisting of thermoplastic material (10), a second layer joined to the first layer by the joint and comprising or consisting of fibre composite material (11) and a third layer (12), which is arranged on the side of the second layer remote from the joint, comprising or consisting of a honeycomb structure and/or a foam.

12. A device according to any of claims 10 and 11, **characterised in that** the component is a sidewall panel in an aircraft (30), preferably in a space (31) in the aircraft which is pressurisable when in operation, preferably in the cabin space of the aircraft, and/or a hat rack box of the aircraft (30) or a part of the sidewall panel and/or a part of the hat rack box.

13. A device according to any one of claims 10 to 12, **characterised in that** the bracket arrangement is arranged within an aircraft (30), preferably within a space in an aircraft (30) pressurisable when in operation.

14. A device according to any one of claims 10 to 13, **characterised in that** the device is an aircraft (30).

## Patentansprüche

1. Verfahren zum Verbinden eines thermoplastischen Materials (10) mit einem Faserverbundmaterial (11) eines Flugzeugs, wobei das thermoplastische Material (10) mit dem Faserverbundmaterial (11) verschweißt wird, wobei das Faserverbundmaterial ein mit Fasern verstärktes Matrixmaterial ist oder ein mit Fasern verstärktes Matrixmaterial aufweist und wobei das Matrixmaterial ein Duroplast ist oder ein Duroplast aufweist, **dadurch gekennzeichnet, dass** das thermoplastische Material (10) mit dem Faserverbundmaterial (11) durch Bewegungsschweißen verschweißt wird, wobei eine Relativbewegung zwischen dem thermoplastischen Material und dem Faserverbundmaterial durch Rotations- und Vibrationsbewegung von dem thermoplastischen Material und dem Faserverbundmaterial relativ zueinander generiert wird, wobei das thermoplastische Material (10) Bestandteil eines Halters (33) ist oder der Halter (33) aus dem thermoplastischen Material (10) besteht, und wobei das Faserverbundmaterial (11) Bestandteil eines Bauteils (32) ist oder das Bauteil (32) aus dem Faserverbundmaterial (11) besteht, sodass das thermoplastische Material (10) des Halters (33) mit dem Faserverbundmaterial (11) des Bauteils (32) verschweißt wird, um den Halter (33) mit dem Bauteil (32) unter Bildung einer Halteranordnung zu verbinden.

2. Verfahren nach einem der vorstehenden Ansprüche, **dadurch gekennzeichnet, dass** Fasern des Faserverbundmaterials unidirektional ausgerichtet sind oder ein Gewebe bilden.

3. Verfahren nach einem der vorstehenden Ansprüche, **dadurch gekennzeichnet, dass** das Faserverbundmaterial (11) Kohlefasern und/oder Glasfasern, vorzugsweise ein CFK-Material und/oder ein GFK-Material, aufweist.

4. Verfahren nach einem der vorstehenden Ansprüche, **dadurch gekennzeichnet, dass** das Faserverbundmaterial (11) mit einem Harz, insbesondere mit einem Polyadditions- und/oder Polykondensationsharz, hergestellt ist.

5. Verfahren nach einem der vorstehenden Ansprüche, **dadurch gekennzeichnet, dass** das Faserverbundmaterial (11) auf einer Wabenstruktur (15), insbesondere einer Nomexwabe, angeordnet ist.

6. Verfahren nach Anspruch 5, **dadurch gekennzeichnet, dass** die Wabenstruktur (15) als Schicht ausgebildet ist und das Faserverbundmaterial (11) schichtförmig auf zwei einander gegenüberliegenden Seiten der Wabenstruktur (15) aufgebracht ist.

7. Verfahren nach einem der vorstehenden Ansprüche, **dadurch gekennzeichnet, dass** das thermoplastische Material (10) aus einem oder mehreren technischen Thermoplasten besteht oder eine oder mehrere technische Thermoplaste aufweist.

8. Verfahren nach einem der vorstehenden Ansprüche, **dadurch gekennzeichnet, dass** das thermoplastische Material (10) aus Polyamid besteht oder Polyamid aufweist.

9. Verfahren nach einem der vorstehenden Ansprüche, **dadurch gekennzeichnet, dass** das Bauteil eine Seitenverkleidung in einem Flugzeug (30), vorzugsweise in einem in Betreib druckbelüftbaren Raum (31) des Flugzeugs, und/oder ein Hatrack-Kasten des Flugzeugs oder ein Teil der Seitenverkleidung und/oder ein Teil des Hatrack-Kastens ist.

10. Vorrichtung aufweisend thermoplastisches Material (10) und Faserverbundmaterial (11) eines Flugzeugs, wobei das thermoplastische Material (10) und das Faserverbundmaterial (11) eine Verbindung aufweisen, wobei das Faserverbundmaterial ein mit Fasern verstärktes Matrixmaterial ist oder ein mit Fasern verstärktes Matrixmaterial aufweist und wobei das Matrixmaterial ein Duroplast ist oder ein Duroplast aufweist, wobei die Vorrichtung eine Halteanordnung mit einem Halter (33) und einem Bauteil (32) aufweist, wobei das thermoplastische Material (10) Bestandteil des Halters (33) ist oder der Halter (33) das thermoplastische Material (10) aufweist, wobei das Faserverbundmaterial (11) Bestandteil des Bauteils (32) ist oder das Bauteil (32) das Faserverbundmaterial (11) aufweist, wobei durch die Verbindung der Halter (33) mit dem Bauteil (32) verbunden ist, wobei die Verbindung nach einem Verfahren gemäß einem der Ansprüche 1 bis 9 herstellbar ist.

11. Vorrichtung nach Anspruch 10, **dadurch gekennzeichnet, dass** die Vorrichtung eine Schichtenfolge aufweist mit einer ersten Schicht aufweisend oder bestehenden aus thermoplastischen Material (10), einer mit der ersten Schicht durch die Verbindung verbundenen zweiten Schicht aufweisend oder bestehenden aus Faserverbundmaterial (11) und einer dritten Schicht (12), die auf der von der Verbindung abgewandten Seite der zweiten Schicht angeordnet ist, aufweisend oder bestehend aus einer Wabenstruktur und/oder einem Schaum.

12. Vorrichtung nach einem der Ansprüche 10 und 11, **dadurch gekennzeichnet, dass** das Bauteil eine Seitenverkleidung in einem in Betrieb druckbelüftbaren Raum (31) eines Flugzeugs (30), vorzugsweise im Kabinenraum des Flugzeugs und/oder ein Hatrack-Kasten des Flugzeugs (30) oder ein Teil der Seitenverkleidung und/oder ein Teil des Hatrack-Kastens ist.

13. Vorrichtung nach einem der Ansprüche 10 bis 12, **dadurch gekennzeichnet, dass** die Halteanordnung innerhalb eines Flugzeugs (30), vorzugweise innerhalb eines in Betrieb druckbelüftbaren Raums des Flugzeugs (30), angeordnet ist.

14. Vorrichtung nach einem der Ansprüche 10 bis 13, **dadurch gekennzeichnet, dass** die Vorrichtung an Flugzeug (30) ist.

## Revendications

1. Procédé permettant de lier un matériau thermoplastique (10) à un matériau composite comprenant des fibres (11) d'un aéronef, le matériau thermoplastique (10) étant soudé au matériau composite comprenant des fibres (11), dans lequel le matériau composite comprenant des fibres est un matériau à matrice renforcée par des fibres ou comprend un matériau à matrice renforcée par des fibres et dans lequel le matériau à matrice est un thermodurci ou comprend un thermodurci, **caractérisé en ce que** le matériau thermoplastique (10) est soudé au matériau composite comprenant des fibres (11) par soudage mobile, dans lequel un mouvement relatif entre le matériau thermoplastique et le matériau composite comprenant des fibres est généré par un mouvement de rotation et de vibration du matériau thermoplastique et du matériau composite l'un par rapport à l'autre, dans lequel le matériau thermoplastique (10) est un constituant d'un support (33) ou le support (33) est composé du matériau thermoplastique (10), et dans lequel le matériau composite comprenant des fibres (11) est un constituant d'un composant (32) ou le composant (32) est composé du matériau composite comprenant des fibres (11), de sorte que le matériau thermoplastique (10) du support (33) est soudé au matériau composite comprenant des fibres (11) du composant (32) afin de lier le support (33) au composant (32) pour former un ensemble support.

2. Procédé selon l'une quelconque des revendications précédentes, **caractérisé en ce que** les fibres du matériau composite comprenant des fibres sont orientées de manière unidirectionnelle ou forment un tissu tissé.

3. Procédé selon l'une quelconque des revendications précédentes, **caractérisé en ce que** le matériau composite comprenant des fibres (11) comprend des fibres de carbone et/ou des fibres de verre, de préférence un matériau de CFRP et/ou un matériau de GRP.

4. Procédé selon l'une quelconque des revendications précédentes, **caractérisé en ce que** le matériau composite comprenant des fibres (11) est produit au moyen d'une résine, en particulier au moyen d'une résine produite par polyaddition et/ou par polycondensation.

5. Procédé selon l'une quelconque des revendications précédentes, **caractérisé en ce que** le matériau composite comprenant des fibres (11) est disposé sur une structure en nid d'abeilles (15), en particulier un nid d'abeilles Nomex.

6. Procédé selon la revendication 5, **caractérisé en ce que** la structure en nid d'abeilles (15) prend la forme d'une couche et le matériau composite comprenant des fibres (11) est appliqué en couches sur deux côtés se faisant face de la structure en nid d'abeilles (15).

7. Procédé selon l'une quelconque des revendications précédentes, **caractérisé en ce que** le matériau thermoplastique (10) est composé d'un ou de plusieurs thermoplastiques d'ingénierie ou comprend un ou plusieurs thermoplastiques d'ingénierie.

8. Procédé selon l'une quelconque des revendications précédentes, **caractérisé en ce que** le matériau thermoplastique (10) est composé d'un polyamide ou comprend un polyamide.

9. Procédé selon l'une quelconque des revendications précédentes, **caractérisé en ce que** le composant est un panneau de paroi latérale dans un aéronef (30), de préférence dans un espace (31) dans l'aéronef qui peut être mis sous pression quand il est en fonctionnement et/ou une boite porte-chapeau de l'aéronef ou une partie du panneau de paroi latérale et/ou une partie de la boite porte-chapeau.

10. Dispositif comprenant un matériau thermoplastique (10) et un matériau composite comprenant des fibres (11) d'un aéronef, dans lequel le matériau thermoplastique (10) et le matériau composite comprenant des fibres (11) comprennent un joint, dans lequel le matériau composite comprenant des fibres est un matériau à matrice renforcée par des fibres ou comprend un matériau à matrice renforcée par des fibres et dans lequel le matériau à matrice est un thermodurci ou comprend un thermodurci, dans lequel le dispositif comprend un ensemble support présentant un support (33) et un composant (32), le matériau thermoplastique (10) étant un constituant du support (33) ou le support (33) comprenant le matériau thermoplastique (10), le matériau composite comprenant des fibres (11) étant un constituant du composant (32) ou le composant (32) comprenant le matériau composite comprenant des fibres (11), le support (33) étant lié au composant (32) par le joint, le joint pouvant être produit au moyen d'un procédé selon l'une quelconque des revendications 1 à 9.

11. Dispositif selon la revendication 10, **caractérisé en ce que** le dispositif comprend une séquence de couches présentant une première couche comprenant ou consistant en un matériau thermoplastique (10), une deuxième couche liée à la première couche par le joint et comprenant ou consistant en un matériau composite comprenant des fibres (11) et une troisième couche (12), qui est disposée sur le côté de la deuxième couche à distance du joint, comprenant ou consistant en une structure en nid d'abeilles et/ou une mousse.

12. Dispositif selon l'une quelconque des revendications 10 et 11, **caractérisé en ce que** le composant est un panneau de paroi latérale dans un aéronef (30), de préférence dans un espace (31) dans l'aéronef qui peut être mis sous pression quand il est en fonctionnement, de préférence dans l'espace habitable de l'aéronef, et/ou une boite porte-chapeau de l'aéronef (30) ou une partie du panneau de paroi latérale et/ou une partie de la boite porte-chapeau.

13. Dispositif selon l'une quelconque des revendications 10 à 12, **caractérisé en ce que** l'ensemble support est disposé à l'intérieur d'un aéronef (30), de préférence au sein d'un espace d'un aéronef (30) pouvant être mis sous pression quand il est en fonctionnement.

14. Dispositif selon l'une quelconque des revendications 10 à 13, **caractérisé en ce que** le dispositif est un aéronef (30).
